# EUROPÄISCHE PATENTSCHRIFT

(11) **EP 3 490 094 B1**
(45) Veröffentlichungstag und Bekanntmachung des Hinweises auf die Patenterteilung: **07.08.2024**
(21) Anmeldenummer: 18208373.3
(22) Anmeldetag: 26.11.2018
(51) Int. Cl.: H02J 3/14, H02J 13/00

(54) **VERFAHREN ZUR VERTEILUNG ELEKTRISCHER ENERGIE**
METHOD FOR DISTRIBUTING ELECTRICAL ENERGY
PROCÉDÉ DE DISTRIBUTION D'ÉNERGIE ÉLECTRIQUE

(30) Priorität: 24.11.2017 AT 601332017
(43) Veröffentlichungstag der Anmeldung: 29.05.2019
(73) Patentinhaber: KEY ENERGY Solutions GmbH, 2630 Ternitz (AT)
(72) Erfinder: BAUMGARTEN, Günther, 7000 Eisenstadt (AT); HADWIGER, Albert, 1130 Wien (AT)
(74) Vertreter: Babeluk, Michael

(56) Entgegenhaltungen:
- EP-A1- 3 133 708
- DE-A1- 102006 028 823
- DE-A1- 102009 027 800
- DE-A1- 102016 103 978

## Beschreibung

Die Erfindung betrifft ein Verfahren zur Verteilung von elektrischer Energie in einem Stromnetzwerk gemäß dem Oberbegriff von Patentanspruch 1.

Benutzer sind typischerweise Stromverbraucher wie etwa Haushalte oder Gewerbebetriebe, können aber auch mit Anlagen zur Stromerzeugung, wie etwa Fotovoltaikanlagen versehen sein und damit gegebenenfalls netto Strom erzeugen.

Um die Belastung der Stromnetze zu verringern und um Verbrauchsspitzen zu vermeiden und die Energieverteilung mögliche ökonomisch zu gestalten sind bereits einige Steuerungssysteme bekannt, die Verbraucher von Benutzern des Stromnetzes gezielt ab- oder einschalten. Jedoch sind die bekannten Lösungen in Form von elektromechanischen Schützen und dergleichen wenig effektiv. Auch andere bekannte Steuerungseinrichtungen, welche Verbraucher gezielter aufgrund der Tageszeit oder aufgrund der Strompreise steuern, zeigen nur begrenzte Wirkung. Da durch die zunehmende Verwendung von solchen Verbrauchern, welche über kurze Zeitintervalle viel Strom benötigen, das Stromnetz stark belasten und daher für Energieversorger die stetige Bereitstellung der momentan gewünschten Energiemenge eine immer größere Herausforderung darstellt, ist eine Entlastung von Stromnetzen, insbesondere das Verhindern von Stromspitzen wünschenswert.

Dabei muss zwischen solchen Verbrauchern unterschieden werden, welche sinnvollerweise nicht steuerbar sind, da ein sofortiges Ein- oder Ausschalten durch den Benutzer gewünscht ist, wie etwa an Fernseher oder Lampen. Hingegen sind andere gut über ein intelligentes System steuerbar, da der genaue Zeitpunkt, die Intensität des Betriebes oder die Betriebsdauer, bzw. -intervalle keinen oder kaum einen Einfluss auf die Verwendung durch den Benutzer haben. Beispielsweise ist es für Wärmepumpen oder Heizsysteme durch ihre Speicherwirkung wenig erheblich, zu welchem Zeitpunkt genau sie arbeiten, da sie oft lediglich eine gewisse Raumtemperatur erhalten müssen.

Aus der DE 10 2009 027 800 A ist ein Haushaltsgerät bekannt, das über eine Kommunkikationseinrichtung mit anderen Haushaltsgeräten kommunizieren kann, um geräteinterne Verbraucher anzusteuern. Die DE 10 2006 028 823 A betrifft ein Stromversorgungsnetz für ein Flugzeug. Diese Lösungen sind jedoch nicht geeignet, ein Stromversorgungsnetz mit einer Vielzahl von Haushalten oder Gewerbebetrieben zu optimieren.

Aufgabe der vorliegenden Erfindung ist damit, ein Verfahren zur Verteilung von elektrischer Energie in einem Stromnetzwerk sowie eine Kommunikationseinheit zur Steuerung von steuerbaren Verbrauchern bereitzustellen, wodurch das Stromnetzwerk entlastet und eine bessere Verteilung der Energienachfrage erreicht werden kann.

Diese Aufgabe wird erfindungsgemäß durch die Merkmale von Patentanspruch 1 gelöst.

Durch den Austausch der Informationen über einen gewünschten Verbrauch oder eine mögliche Bereitstellung von Energie durch einen steuerbaren Verbraucher kann zwischen den Kommunikationseinheiten untereinander entschlossen werden, welcher steuerbare Verbraucher zu welchem Zeitpunkt Energie liefert oder verbraucht, bzw. in welchem Ausmaß er dies tut. Beispielsweise könnte der Ladevorgang eines Elektroautos, das während der Nachtzeit geladen werden soll bei einer momentan starken Stromnachfrage unterbrochen werden, verlangsamt oder auf einen späteren Zeitpunkt verschoben werden. Da es für den Benutzer unerheblich ist, zu welchem Zeitpunkt und in welcher Geschwindigkeit der Ladevorgang stattfindet geschieht dies ohne Beeinträchtigung des Lebensstils des Benutzers, bzw. in Fall von Betrieben des Arbeitsprozesses. Die Batterie des Elektroautos könnte sogar als kurzzeitige Energiequelle bei besonders großer Nachfrage von Energie verwendet werden.

Der Energieversorger ist in der Regel ein Stromerzeuger oder Stromhandelsunternehmen, welches Stromliefervertrage mit den Benutzern abgeschlossen hat. In einem kleineren Rahmen kann der Stromlieferant aber auch stark reduzierte Formen annehmen, beispielsweise in Form eines kleineren Generators, wenn die Benutzer des Netzwerkes über ausreichende eigene Energiequellen beispielsweise in Form von Fotovoltaik- oder Windkraftanlagen, sodass ein Großteil der Energienachfrage von den Benutzern selbst befriedigt wird.

Ein weiterer Vorteil der Erfindung liegt darin, dass durch die Verbindung der Kommunikationseinheiten untereinander eine Entlastung des Stromnetzes unabhängig vom Energieversorger stattfinden kann. Jedoch kann es auch vorteilhaft sein, wenn die Kommunikationseinheiten mit dem Stromversorger über eine Datenverbindung Daten austauschen können. Dadurch kann der Energieversorger schnell Wünsche und Informationen über die Auslastung des Netzes an die Kommunikationseinheiten weiterleiten. Dies kann beispielsweise sinnvoll sein, wenn der Energieversorger größere Energieverbräuche oder -überschüsse feststellt oder diese für die Zukunft vorhersieht und daher ein bestimmtes Verhalten der Gruppe wünscht.

Da Strom über weite Distanzen zu transportieren aufwändig ist und mit Verlusten einhergeht ist erfindungsgemäß vorgesehen, dass die Benutzer einer Gruppe eine räumliche Nähe zueinander aufweisen. Dadurch kann der lokal vorhandene Strom unter den Kommunikationseinheiten verteilt werden, bzw. die Nachfrage lokal zumindest teilweise gedeckt werden.

Die Benutzer einer Gruppe werden dabei über dieselbe Versorgungsleitung von dem Energieversorger versorgt. Dies entlastet das Stromnetz, da die Verteilung der Energie innerhalb der Gruppe auf möglichst kurzem Wege stattfindet.

Bei manchen Verbrauchern ist es wünschenswert für den Benutzer, dass dieser Energie bis zu einem gewissen Zeitpunkt oder innerhalb eines gewissen Zeitintervalls verbraucht oder abgibt. Beispielsweise kann es wünschenswert sein, eine Waschmaschine derart ansteuern zu lassen, dass sie in den nächsten sechs Stunden einen Waschgang durchführt. Dafür ist es vorteilhaft, wenn vorgesehen ist, dass die Benutzer einzelne Verbraucher nur für gewisse Zeitintervalle für die Kommunikationseinheit steuerbar machen.

Wenn vorgesehen ist, dass die Kommunikationseinheiten den Stromverbrauch bzw. die Strombereitstellung messen, so kann die Kommunikationseinheit daraus Informationen über den zukünftigen Verbrauch bzw. die zukünftige Bereitstellung ableiten. Dadurch kann das System Berechnungen und Vorhersagen treffen, die zu einer Verbesserung der Energienachfrage führen. Es kann auch vorgesehen sein, dass andere Parameter gemessen werden, beispielsweise die Dauer der Stromaufnahme, das Auftreten von Perioden mit stärkerem oder schwächerem Energiebedarf, etc.

Besonders vorteilhaft ist, wenn die Kommunikationseinheit die steuerbaren Verbraucher ein- und ausschalten, sowie deren Stromverbrauch oder Strombereitstellung begrenzen kann. Dadurch kann eine optimale Auslastung des Systems erreicht werden.

Um das Risiko des unerwünschten Fehlens oder Überflusses von Energie weiter zu senken kann es vorteilhaft sein, wenn die Kommunikationseinheiten den Stromverbrauch oder die Strombereitstellung der durch sie steuerbaren Verbraucher innerhalb eines bestimmten Zeitrahmens planen. Für die Planung können Messwerte, voreingestellte Werte oder Bedingungen verwendet werden. Besonders sinnvoll jedoch ist, wenn die Planung aufgrund der Bedürfnisse des Energieversorgers und/oder aufgrund der von den anderen Kommunikationseinheiten erhaltenen Daten erfolgt. Dabei kann wünschenswert sein, dass der Zeitrahmen von den Benutzern für jedes ihrer steuerbaren Verbraucher individuell einstellbar ist. Beispielsweise kann der Energieversorger bestimmte Auslastungsgrenzen angeben, gegebenenfalls abhängig von der Tageszeit.

Die Kommunikationseinheiten befinden sich vorzugsweise in oder nahe den Räumlichkeiten, in denen die durch sie steuerbaren Verbraucher angeordnet sind. In der Regel wird es sich dabei um den Wohnort oder Arbeitsort des Benutzers handeln. Ist in dieser Partei ein Hausbussystem eingerichtet, bzw. soll ein derartiges eingerichtet werden, so ist es sinnvoll, wenn die Steuerung der Verbraucher über ein Hausbussystem erfolgt.

Dabei wird zumindest einem Benutzer zumindest eine Energieerzeugungseinheit zugeordnet, welche ebenso von dessen Kommunikationseinheit gesteuert wird. Es sei beispielsweise an Fotovoltaik-Anlagen zu denken, welche vom Benutzer an geeigneter Stelle angebracht wird. Der damit produzierte Strom wird bei einem Überschuss in das Netz geleitet werden und durch die Kommunikationseinheiten optimal genutzt werden, da so das Ausmaß der von der Energieerzeugungseinheit bereitgestellten Energie oft schlecht vorhersehbar ist. Wird plötzlich viel Energie erzeugt und eingespeist, beispielsweise bei starker Sonneneinstrahlung oder starkem Wind bei Windrädern, so kann die unter den Kommunikationseinheiten verteilt werden, welche bevorzugt zu diesen Zeitpunkten steuerbare Verbraucher mit Energie versorgen. Insbesondere wenn die Energie unter geographisch nahe angeordneten Kommunikationseinheiten aufgeteilt wird, wird damit eine besonders geringe Belastung des Stromnetzes bewerkstelligt.

Um mehrere Kommunikationseinheiten zu Subgruppen zusammenfassen zu können, kann es vorteilhaft sein, wenn zumindest ein Teil der Kommunikationseinheiten mit einer Master-Kommunikationseinheit in Verbindung steht, welche die Kommunikationseinheiten steuert. Dadurch können Hierarchien aufgebaut werden und eine Energieverteilung innerhalb eines größeren Systems optimiert werden. Alternativ kann aber auch vorgesehen sein, dass alle Kommunikationseinheiten der Gruppe gleichberechtigt in ihren Interaktionen mit anderen Kommunikationseinheiten der Gruppe sind. In einem derartigen System kann keine Kommunikationseinheit eine andere überstimmen oder ihr Verhalten gegenüber der anderen priorisieren.

Die Steuerung der steuerbaren Verbraucher kann unterschiedlich erfolgen. Beispielsweise kann vorgesehen sein, dass die Steuerung zumindest eines steuerbaren Verbrauchers über das Schalten von Stromleitungen erfolgt. Es kann aber auch vorgesehen sein, dass die Steuerung zumindest eines steuerbaren Verbrauchers über die Übertragung von Daten von der Kommunikationseinheit zu dem steuerbaren Verbraucher erfolgt. Die Schaltung über Relais stellt beispielsweise eine sehreinfache und kostengünstige Variante dar. Um eine einfache Verbindung zwischen steuerbaren Verbraucher und Kommunikationseinheit herstellen zu können ist es sinnvoll, wenn der steuerbare Verbraucher über zumindest eine Steuerschnittstelle mit der Kommunikationseinheit verbunden ist. Diese Schnittstellen können standardisiert werden oder individuell an verschiedene Geräte angepasst.

Wenn die Kommunikationseinheit zumindest einen Anschluss zum Verbinden mit einer Stromleitung aufweist, so kann direkt Einfluss auf den Stromfluss über die Kommunikationseinheit genommen werden. Des Weiteren kann auch vorgesehen sein, dass die Kommunikationseinheit zumindest eine Messeinheit zur Messung des Stromflusses des der Stromleitung aufweist. Damit kann die Kommunikationseinheit direkt den Stromverbrauch, bzw. Energiebereitstellung messen. Bei einer Vielzahl von Verbrauchern können auch verschiedene Anschlüsse vorgesehen sein, bzw. mehrere Messeinheiten.

Damit für den Benutzer wünschenswerte Änderungen leicht an der Kommunikationseinheit vorgenommen werden können, also beispielsweise neue steuerbare Verbraucher zum System hinzugefügt, diese entfernt bzw. Zeitintervalle oder andere Einstellungen verändert werden sollen, so kann es vorteilhaft sein, wenn die Kommunikationseinheit ein Interface zur Interaktion mit Personen aufweist.

Damit Daten wie beispielsweise Grenzwerte oder Messwerte gespeichert werden können ist es vorteilhaft, wenn die Kommunikationseinheit einen Speicher aufweist.

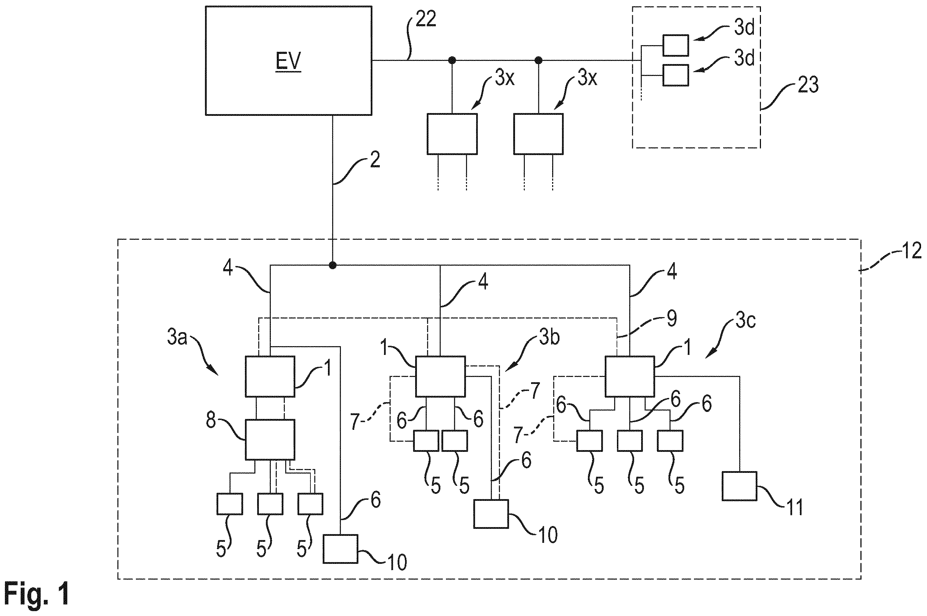

In der Folge wird die vorliegende Erfindung anhand einer in der Figur dargestellten Ausführungsvariante näher erläutert. Es zeigt
- Fig. 1: eine Ausführungsform eines Stromnetzwerks, welches erfindungsgemäße Kommunikationseinheiten aufweist, sowie das erfindungsgemäße Verfahren verwendet.

Die in Fig. 1 gezeigte Ausführungsform eines Stromnetzwerks weist einen Energieversorger EV auf, welcher insgesamt zwei Versorgungsleitungen 2, 22 versorgt.

Über eine Versorgungsleitung 2 werden insgesamt drei Benutzer 3a, 3b, 3c mit Energie versorgt. Jedem Benutzer 3a, 3b, 3c ist eine Kommunikationseinheit 1 zugeordnet, welche über Zuführleitungen 4 mit der Versorgungsleitung 2 verbunden sind. Dabei bilden diese Benutzer 3a, 3b, 3c zusammen eine Gruppe 12. Bei zwei Benutzern 3b, 3c führen Stromleitungen 6 zu steuerbaren Verbrauchern 5, wobei einige steuerbare Verbraucher 5 zusätzlich über Datenleitungen 7 mit den Kommunikationseinheiten 1 verbunden sind. Jene steuerbare Verbraucher 5, die keine Datenleitungen 7 zu den Kommunikationseinheiten 1 aufweisen werden von der Kommunikationseinheit 1 über die Versorgung mit Strom über deren Stromleitungen 6 gesteuert, während jene mit Datenleitungen 7 verbundene steuerbare Verbraucher 5 über diese Datenleitungen 7 von der Kommunikationseinheit 1 gesteuert werden. Durch diese Bauweise kann die Kommunikationseinheit 1 den Stromverbrauch jedes an ihm angeschlossenen steuerbaren Verbrauchers 5 messen, speichern und anhand dieser sein Verhalten für die Zukunft anpassen. Die Kommunikationseinheit 1 des Benutzers 3a ist sowohl über eine Stromleitung 6 als auch über eine Datenleitung 7 mit einem Hausbussystem 8 verbunden, welches über Stromleitungen 6 und Datenleitungen 7 Verbindungen zu den steuerbaren Verbrauchern 5 herstellt. Die Kommunikationseinheiten 1 sind miteinander über Netzwerkleitungen 9 verbunden, und tauschen so Informationen untereinander aus, welche steuerbaren Verbraucher 5 Energie bereitstellen oder benötigen würden und in welchem Ausmaß dies der Fall ist. In der beschriebenen Ausführungsform ist der Energiebereitsteller EV nicht Teil des dieses Netzwerkes, es kann aber vorteilhaft sein, wenn er ebenso entweder Teil des Netzwerkes ist, oder gesonderte Datenaustauschverbindungen zu zumindest einem Teil der Kommunikationseinheiten 1 aufweist. Da dies hier nicht gegeben ist, steuern die Kommunikationseinheiten 1 ihre Verbraucher 5 nur anhand voreingestellter, selbst durch Messungen erhobener, untereinander ausgetauschter bzw. anhand vom Verbraucher 3a, 3b, 3c eingegebener Daten. Beispielsweise kann den Kommunikationseinheiten 1 ein Auslastungswert der Versorgungsleitung 2 bekannt gegeben werden, welcher wenn möglich nicht überschritten werden soll. Je nach momentaner Auslastung können die Kommunikationseinheiten 1 untereinander entscheiden, zu welchem Zeitpunkt welcher steuerbarer Verbraucher 5 wieviel Energie verbrauchen darf bzw. zu Verfügung stellen soll. Die steuerbaren Verbraucher 5 können auch in Hierarchien eingeteilt werden, je nachdem wie dringend die Energie benötigt wird.

Zusätzlich zu den steuerbaren Verbrauchern 5 sind auch nicht steuerbare Verbraucher 10 vorgesehen, welche nicht durch die Kommunikationseinheiten 1 gesteuert werden. Dabei handelt es sich um solche Verbraucher, welche vom Benutzer 3a, 3b, 3c spontan in Betrieb genommen werden und sofort Energie benötigen oder diese ins System einleiten und deswegen für eine Steuerung unattraktiv sind, beispielsweise um Lichtinstallationen, Bügeleisen, etc. Solche können über Stromleitungen 6 versorgt werden, die nicht über eine Kommunikationseinheit 1 geleitet wird, wie bei Benutzer 3a dargestellt. Es kann aber durchaus sinnvoll sein, die Stromleitung 6 über eine Kommunikationseinheit 1 zu führen, wie bei Benutzer 3b, da so gegebenenfalls ein nicht steuerbarer Verbraucher 10 falls gewünscht vom Benutzer 3b zu einem steuerbaren Verbraucher umgestellt werden kann. Dies kann beispielsweise der Fall sein, wenn es sich bei dem Verbraucher um eine Waschmaschine handelt. Will der Benutzer 3b die Waschmaschine sofort benutzen, so gibt er seiner Kommunikationseinheit 1 bekannt, dass dieser Verbraucher nun nicht steuerbar ist. Zu einem späteren Zeitpunkt könnte der Benutzer 3b aber die Waschmaschine in einen verwendungsfertigen Zustand bringen und einen Waschgang nicht unbedingt sofort starten wollen, sondern nur einen gewissen Zeitpunkt angeben, bis zu dem der Waschgang abgeschlossen sein soll. Zu diesem Zweck kann er die Waschmaschine an der Kommunikationseinheit 1 als steuerbar freischalten und ihr den Zeitpunkt bekannt geben. Die Kommunikationseinheit 1 kann dann über Datenleitungen 7 Informationen mit der Waschmaschine austauschen und diese nach Bedarf starten, bzw. falls notwendig unterbrechen.

Darüber hinaus weist Benutzer 3c eine Energieerzeugungseinheit 11 in Form einer Fotovoltaikanlage auf, welche mit der Kommunikationseinheit 1 verbunden ist. Produziert diese Strom, so wird zuerst die Energienachfrage des eigenen Benutzers 3c damit befriedigt und gegebenenfalls auch die steuerbaren Verbraucher 5 des Benutzers 3c falls sinnvoll mit Energie versorgt. Wird mehr Energie erzeugt als von diesem Benutzer 3c benötigt, so wird dieser in das Stromnetz eingespeist und die Information über die Einspeisung zusammen mit deren Parametern wie der Leistung über die Netzwerkleitungen 9 an die anderen Kommunikationseinheiten 1 weitergeleitet. In der Regel werden die anderen Kommunikationseinheiten 1 somit versuchen, die überschüssige Energie entsprechend zu verteilen, um so einen Energierückfluss zum fernen Energieversorger EV zu verhindern. Dazu können steuerbare Verbraucher 5 der anderen Benutzer 3a, 3b eingeschalten werden, falls dies sinnvoll ist.

Über Versorgungsleitung 22 wird eine Reihe anderer, teilweise dargestellter Benutzer 3d mit - nicht dargestellten - steuerbaren Verbrauchern 5 versorgt, welche ebenso mit Kommunikationseinheiten 1 ausgestattet sind und eine weitere Gruppe 23 bilden, die nur ansatzweise dargestellt ist. Versorgungsleitung 22 versorgt aber auch schematisch dargestellte weitere Benutzer 3x, welche nicht Teil einer Gruppe sind. Die Benutzer 3x besitzen entweder keine Kommunikationseinheit 1 oder diese ist derart eingestellt, dass sie nicht Teil einer Gruppe werden.

## Patentansprüche

1. Verfahren zur Verteilung von elektrischer Energie in einem Stromnetzwerk, bei dem mehrere Benutzer (3a, 3b, 3c, 3d, 3x), die jeweils zumindest einen Verbraucher (5,10) aufweisen, über ein Stromnetz mit einem Energieversorger (EV) verbunden sind und bei dem einzelne steuerbare Verbraucher (5) zur Anpassung des Stromflusses gesteuert werden, wobei die Benutzer Haushalte und/oder Gewerbebetriebe sind, wobei mindestens eine Gruppe (12, 23) von Benutzern (3a, 3b, 3c, 3d) besteht, denen jeweils eine Kommunikationseinheit (1) zugeordnet ist, die steuerbare Verbraucher (5) des jeweiligen Benutzers (3a, 3b, 3c, 3d) steuert, **dadurch gekennzeichnet, dass** die Kommunikationseinheit (1) Informationen über den Energiebedarf des Benutzers (3a, 3b, 3c, 3d) mit anderen Kommunikationseinheiten (1) austauscht, um diesen nach den Bedürfnissen des Energieversorgers (EV) anzupassen und dass die Benutzer (3a, 3b, 3c, 3d) einer Gruppe (12, 23) über dieselbe Versorgungsleitung (2, 22) von dem Energieversorger versorgt werden und dass zumindest einem Benutzer (3c) zumindest eine Energieerzeugungseinheit (11) zugeordnet ist, welche ebenso von dessen Kommunikationseinheit (1) gesteuert wird und dass bei Überschuss Strom von der Energieerzeugungseinheit in das Stromnetz eingespeist wird.

2. Verfahren nach Anspruch 1, **dadurch gekennzeichnet, dass** die Kommunikationseinheiten (1) mit dem Stromversorger (EV) über eine Datenverbindung Daten austauschen können.

3. Verfahren nach einem der Ansprüche 1 oder 2, **dadurch gekennzeichnet, dass** die Benutzer (3a, 3b, 3c, 3d) einzelne Verbraucher (5,10) nur für gewisse Zeitintervalle für die Kommunikationseinheit (1) steuerbar machen.

4. Verfahren nach einem der Ansprüche 1 bis 3, **dadurch gekennzeichnet, dass** die Kommunikationseinheiten (1) den Stromverbrauch bzw. die Strombereitstellung messen.

5. Verfahren nach einem der Ansprüche 1 bis 4, **dadurch gekennzeichnet, dass** die Kommunikationseinheit (1) die steuerbaren Verbraucher (5) ein- und ausschalten, sowie deren Stromverbrauch oder Strombereitstellung begrenzen kann.

6. Verfahren nach einem der Ansprüche 1 bis 5, **dadurch gekennzeichnet, dass** die Kommunikationseinheiten (1) den Stromverbrauch oder die Strombereitstellung der durch sie steuerbaren Verbraucher (5) innerhalb eines bestimmten Zeitrahmens planen.

7. Verfahren nach Anspruch 6, **dadurch gekennzeichnet, dass** die Planung aufgrund der Bedürfnisse des Energieversorgers (EV) und/oder aufgrund der von den anderen Kommunikationseinheiten (1) erhaltenen Daten erfolgt.

8. Verfahren nach einem der Ansprüche 1 bis 7, **dadurch gekennzeichnet, dass** der Zeitrahmen von den Benutzern (3a, 3b, 3c, 3d) für jedes ihrer steuerbaren Verbraucher (5) individuell einstellbar ist.

9. Verfahren nach einem der Ansprüche 1 bis 8, **dadurch gekennzeichnet, dass** zumindest ein Teil der Kommunikationseinheiten (1) mit einer Master-Kommunikationseinheit in Verbindung steht, welche die Kommunikationseinheiten (1) steuert.

## Claims

1. Method for distributing electrical energy in an electricity network, in which a plurality of users (3a, 3b, 3c, 3d, 3x), each of which has at least one consumer (5, 10), are connected to an energy supplier (EV) via an electricity network and in which individual controllable consumers (5) are controlled to adjust the flow of electricity, wherein the users are households and/or commercial enterprises, wherein at least one group (12, 23) of users (3a, 3b, 3c, 3d) exists, to each of which a communication unit (1) is assigned which controls controllable consumers (5) of the respective user (3a, 3b, 3c, 3d), **characterised in in that** the communication unit (1) exchanges information about the energy requirement of the user (3a, 3b, 3c, 3d) with other communication units (1) in order to adapt this to the requirements of the energy supplier (EV), and **in that** the users (3a, 3b, 3c, 3d) of a group (12, 23) are supplied by the energy supplier (EV) via the same supply line (2, 22), and **in that** at least one user (3c) is assigned at least one energy generation unit (11) which is also controlled by its communication unit (1), and **in that** electricity from the energy generation unit is fed into the power grid in the event of a surplus.

2. Method according to claim 1, **characterised in that** the communication units (1) can exchange data with the energy supplier (EV) via a data link.

3. Method according to one of claims 1 or 2, **characterised in that** the users (3a, 3b, 3c, 3d) make individual consumers (5, 10) controllable for the communication unit (1) only for certain time intervals.

4. Method according to one of claims 1 to 3, **characterised in that** the communication units (1) measure the electricity consumption or the electricity supply.

5. Method according to one of claims 1 to 4, **characterised in that** the communication unit (1) can switch the controllable consumers (5) on and off and limit their electricity consumption or electricity supply.

6. Method according to one of claims 1 to 5, **characterised in that** the communication units (1) plan the electricity consumption or the electricity supply of the consumers (5) controllable by them within a certain time frame.

7. Method according to claim 6, **characterised in that** the planning is carried out on the basis of the needs of the energy supplier (EV) and/or on the basis of the data received from the other communication units (1).

8. Method according to one of claims 1 to 7, **characterised in that** the time frame is individually adjustable by the users (3a, 3b, 3c, 3d) for each of their controllable consumers (5).

9. Method according to one of claims 1 to 8, **characterised in that** at least some of the communication units (1) are connected to a master communication unit which controls the communication units (1).

## Revendications

1. Procédé de distribution d'énergie électrique dans un réseau électrique selon lequel plusieurs utilisateurs (3a, 3b, 3c, 3d, 3x) qui ont respectivement au moins un consommateur (5, 10) sont reliés à un fournisseur d'énergie (EV) par un réseau et différents consommateurs (5) contrôlables, sont commandés pour adapter le flux de courant,
les utilisateurs étant des ménages et/ou des entreprises,
- au moins un groupe (12, 23) se compose d'utilisateurs (3a, 3b, 3c, 3d) auxquels est respectivement associée une unité de communication (1) qui commande les consommateurs contrôlables (5) de l'utilisateur (3a, 3b, 3c, 3d) respectif,
procédé **caractérisé en ce que**
- l'unité de communication (1) échange des informations concernant le besoin en énergie de l'utilisateur (3a, 3b, 3c, 3d) avec d'autres unités de communications (1) pour l'adapter en fonction des besoins du fournisseur d'énergie (EV), et
- les utilisateurs (3a, 3b, 3c, 3d) d'un groupe (12, 23) sont alimentés par la même ligne d'alimentation (2, 22) par le fournisseur d'énergie, et
- au moins une unité de génération d'énergie (11) est associée à un utilisateur (3c), qui est commandée également par son unité de communication (1), et
- en cas d'excédent, le courant est injecté par l'unité de génération d'énergie dans le réseau électrique.

2. Procédé selon la revendication 1,
**caractérisé en ce que**
les unités de communication (1) peuvent échanger des données avec le fournisseur de courant (EV) par une liaison de données.

3. Procédé selon l'une des revendications 1 ou 2,
**caractérisé en ce que**
les utilisateurs (3a, 3b, 3c, 3d) de communication permettent de commander différents consommateurs (5, 10) seulement pour certains intervalles de temps.

4. Procédé selon l'une des revendications 1 à 3,
**caractérisé en ce que**
les unités de communication (1) mesurent la consommation de courant ou la fourniture de courant.

5. Procédé selon l'une des revendications 1 à 4,
**caractérisé en ce que**
l'unité de communication (1) branche et coupe les consommateurs contrôlables (5) et peut aussi limiter leur consommation de courant ou leur fourniture de courant.

6. Procédé selon l'une des revendications 1 à 5,
**caractérisé en ce que**
les unités de communication (1) planifient la consommation de courant ou la fourniture de courant des consommateurs (5) qu'elles commandent dans un certain cadre de temps.

7. Procédé selon la revendication 6,
**caractérisé en ce que**
la planification se fait en fonction des besoins du fournisseur d'énergie (EV) et/ou des données obtenues des autres unités de communication (1).

8. Procédé selon l'une des revendications 1 à 7,
**caractérisé en ce que**
le cadre de temps est réglé individuellement par les utilisateurs (3a, 3b, 3c, 3d) pour chacun de leurs consommateurs (5) contrôlables.

9. Procédé selon l'une des revendications 1 à 8,
**caractérisé en ce que**
au moins une partie des unités de communication (1) est en liaison avec une unité de communication maître, qui commande les unités de communication (1).
